# EUROPÄISCHE PATENTSCHRIFT

(11) **EP 2 000 649 B1**
(45) Veröffentlichungstag und Bekanntmachung des Hinweises auf die Patenterteilung: **08.08.2012**
(21) Anmeldenummer: 08103970.3
(22) Anmeldetag: 15.05.2008
(51) Int. Cl.: F02C 9/18, F02C 9/52, F04D 27/02, F04D 29/68, F02C 6/08

(54) **Strahltriebwerk mit Verdichterluftzirkulation und Verfahren zum Betreiben desselben**
Jet engine with compressor air circulation and method for operating the same
Moteur à réaction doté d'une circulation d'air de compresseur et procédé de fonctionnement de celui-ci

(30) Priorität: 05.06.2007 DE 102007026455
(43) Veröffentlichungstag der Anmeldung: 10.12.2008
(73) Patentinhaber: Rolls-Royce Deutschland Ltd & Co KG, 15827 Blankenfelde-Mahlow (DE)
(72) Erfinder: Clemen, Carsten, 15749 Mittenwalde (DE); Sielaff, Enrique, 12105 Berlin (DE)
(74) Vertreter: Kronthaler, Wolfgang N.K.

(56) Entgegenhaltungen:
- FR-A1- 2 370 170
- US-A- 5 732 547
- US-A- 6 125 626

## Beschreibung

Die Erfindung betrifft ein Strahltriebwerk mit Verdichterluftzirkulation bei einem vom Innengehäuse eines Bypasskanals umgebenen Verdichter, der eine Zapfstelle zum Absaugen von Verdichterluft an einer stromab gelegenen Position des Strömungspfads und mindestens eine von dieser ausgehende Zapfluftleitung, die an einer stromauf gelegenen Verdichterstufe in den Verdichter mündet, sowie ein Verfahren zum Betrieb eines Strahltriebwerks mit Verdichterluftzirkulation.

Die aerodynamische Belastbarkeit der Bauteile des Hochdruckverdichters eines Strahltriebwerks ist durch das Anwachsen und Ablösen von Grenzschichten an den Schaufeloberflächen sowie der Nabe und dem Gehäuse begrenzt. Beim Abreißen der Strömung, das heißt im nicht stabilen Betriebsbereich des Verdichters jenseits der Pumpgrenze und entsprechend erhöhter Schaufelbelastung, werden die Schaufeln in unkontrollierte Schwingungen versetzt und können beschädigt oder zerstört werden. Eine erhöhte Anzahl an Verdichterstufen und -schaufeln vergrößert zwar die Belastbarkeit, führt aber andererseits zur Verringerung des Wirkungsgrades und zu einem erheblichen Gewichts- und Kostenanstieg. Zur Schaffung optimaler aerodynamischer, stabiler Strömungsverhältnisse und damit zur Vermeidung des sogenannten Pumpens, bei dem die Strömung abreißt und der Verdichter die Luft nicht mehr gegen den hohen Druck transportieren kann, sondern in entgegengesetzter Richtung strömt, ist es aus der DE 102 33 032 A1 bereits bekannt, die hochbelastete, zum Strömungsabriss neigende Rotorstufe mit zusätzlicher Luft hohen Druckes zu beaufschlagen, die aus einer stromab gelegenen Position aus dem Strömungspfad abgesaugt wird und über mindestens eine Leitung der stromauf gelegenen Verdichterstufe wieder zugeführt wird. Dieses Konzept ist insofern nachteilig, als die stromab entnommene verdichtete Luft heißer als die Luft an dem stromauf vorgesehenen Zuführungsort ist. Dadurch wird die Verdichteraustrittstemperatur immer mehr erhöht und mithin der Wirkungsgrad verringert. Andererseits kann die mit hoher Temperatur eingetragene Zusatzluft, das heißt Verdichterzapfluft, zu Materialproblemen führen, und zwar insbesondere auch aufgrund der hohen thermischen Belastung der Schaufelspitzen und der Temperaturdifferenz gegenüber dem eine deutlich geringere Temperatur aufweisenden jeweils unteren Schaufelteil und der dadurch bedingten Spannungen. Dementsprechend hoch ist der Wartungs- und Kostenaufwand. Weiterhin zeigt GB 619722 ein Verfahren zum Betreiben eines Strahltriebwerkes mit Verdichterluftzirkulation nach dem Oberbegriff des Anspruchs 1.

Der Erfindung liegt die Aufgabe zugrunde, ein Strahltriebwerk mit Verdichterluftzirkulation der eingangs erwähnten Art und ein entsprechendes Verfahren so auszuführen, dass der Wirkungsgrad erhöht und der Wartungs- und Kostenaufwand verringert werden kann.

Erfindungsgemäß wird die Aufgabe mit einem Verfahren gemäß den Merkmalen des Patentanspruchs 1 sowie einem entsprechend ausgebildeten Strahltriebwerk nach Anspruch 3 gelöst. Zweckmäßige Weiterbildungen der Erfindung ergeben sich aus den Unteransprüchen.

Der Grundgedanke der Erfindung besteht darin, dass die bei hohem Druck aus dem Verdichter abgezapfte Luft vor der Wiedereinführung in den Verdichter abgekühlt wird, so dass die thermische Belastung der mit der verdichteten Zapfluft beaufschlagten Verdichterschaufeln verringert wird. Außerdem wird die Verdichterluft im Strömungspfad des Verdichters nicht ständig weiter erhitzt, so dass nicht nur stabile Strömungsverhältnisse eingestellt werden können, sondern auch ein höherer Verdichterwirkungsgrad erreicht werden kann.

Die Kühlung der Verdichterzapfluft erfolgt im Wärmeaustausch mit der kühleren, im Bypasskanal strömenden Bypassluft. Hierzu wird eine von der Zapfstelle ausgehende Zapfluftleitung über einen Wärmeübertrager durch den Bypasskanal geführt.

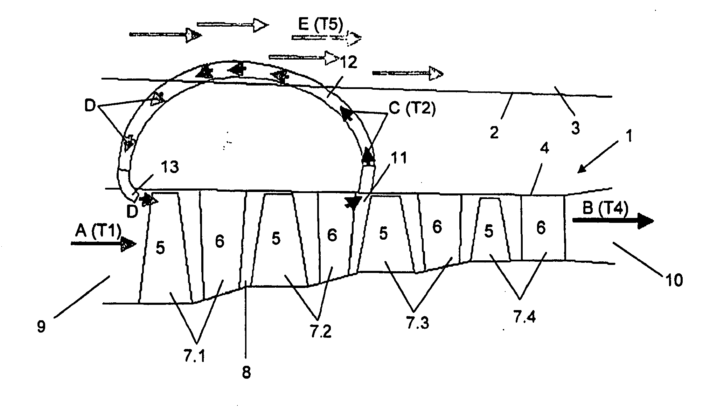

Ein Ausführungsbeispiel der Erfindung wird anhand der Zeichnung, in deren einziger Figur schematisch der Teil eines Strahltriebwerks dargestellt ist, in dem - umgeben vom Bypassinnengehäuse des Bypasskanals - ein mehrstufiger Axialverdichter angeordnet ist, näher erläutert.

Der Verdichter 1 ist vom Innengehäuse 2 des Bypasskanals 3 eines Strahltriebwerks umgeben. Der Verdichter 1 umfasst innerhalb eines Verdichtergehäuses 4 mehrere - jeweils aus einem Rotorschaufelkranz mit Rotorschaufeln 5 und einem Statorschaufelkranz mit Statorschaufeln 6 bestehende - Verdichterstufen 7. In den nach außen vom Verdichtergehäuse 4 begrenzten Verdichterkanal 8 gelangt an dessen Eintrittsseite 9 ein Massenstrom M_{verdichter} aus warmer Verdichterluft (Pfeil A) mit einer Temperatur T1 von beispielsweise 400 K, der den Verdichterkanal 8 an der Austrittsseite 10 in verdichtetem Zustand (Pfeil B) und bei entsprechend erhöhter Austrittstemperatur T4 von beispielsweise 850 K wieder verlässt. Am Verdichterkanal 8 ist hinter der zweiten Verdichterstufe 7.2 eine Zapfstelle (Luftentnahmestelle) 11 mit an diese anschließender Zapfluftleitung 12 vorgesehen, über die verdichtete heiße Verdichterzapfluft (Pfeil C) mit einer Temperatur T2 von beispielsweise 500 K aufgrund des Druckgefälles zurück zur Eintrittsseite 9 des Verdichters 1 transportiert und über eine Düse 13 auf die Spitzen der Rotorschaufeln 5 der ersten Verdichterstufe 7.1 geblasen wird (Pfeil D), um einem Strömungsabriss und entsprechenden Instabilitäten des Verdichterbetriebes zu begegnen. Die heiße Verdichterzapfluft (Pfeil C) wird jedoch nicht direkt zur ersten Verdichterstufe 7.1 geleitet, sondern durch den Bypasskanal 3 geführt und im Wärmeaustausch in einem im Bypasskanal liegenden Wärmeübertrager (nicht dargestellt) mit der kalten Bypassluft (Pfeil E) gekühlt, so dass nicht die heiße, sondern vielmehr gekühlte Verdichterzapfluft (Pfeil F), deren Temperatur gemäß dem vorliegenden Ausführungsbeispiel deutlich unter 500 K liegt, über die Düse 13 zu den Spitzen der Rotorschaufeln 5 der ersten Verdichterstufe 7.1 gelangt.

Die Zuführung der abgekühlten Verdichterzapfluft (Pfeil F) im Falle von Strömungsinstabilitäten vermindert zum einen die thermische Belastung an den Rotorspitzen, so dass Materialschäden vermieden werden, und verringert zudem die Verdichteraustrittstemperatur T4, so dass der Wirkungsgrad des Verdichters gegenüber dem Betrieb ohne Einblasen von zusätzlicher Luft zumindest nicht verschlechtert wird. Dadurch ist es möglich, die Rotorschaufelspitzen höher zu belasten, indem - beispielsweise - die Anzahl der Rotorschaufeln verringert wird, so dass die Kosten und das Gewicht reduziert werden können.

Beim Einblasen von Verdichterzapfluft ohne Kühlung wurde in einer Beispielrechnung ein Verdichterwirkungsgrad von η= 0,94 ermittelt, wenn die Eintrittstemperatur der warmen Verdichterluft mit T1 = 400 K, die Temperatur der Verdichterzapfluft beim Einblasen mit T2 = 500 K und die Austrittstemperatur der heißen Verdichterluft mit T4 = 850 K angenommen wird und ein Druckverhältnis von Π = 12,5 sowie eine Zapfluftmenge von m_{zapfluft} = 1% zugrundegelegt wird.

Demgegenüber erhöht sich der Wirkungsgrad auf η = 0,94, wenn unter Zugrundelegung der zuvor erwähnten Bedingungen die Verdichterzapfluft im Wärmeaustausch mit der Bypassluft, die beispielsweise eine Temperatur von T5 = 350 K hat, bei einem Wirkungsgrad des Wärmetauschers von im ungünstigen Fall η_{Wärmeaustausch} = 0, 6 gekühlt wird. Dieser Wirkungsgrad stimmt unter den hier beispielhaft zugrundegelegten Bedingungen mit dem Wirkungsgrad überein, der ohne notwendige Einblasung von Verdichterzapfluft erzielt werden kann.

### Bezugszeichenliste

- 1: Verdichter
- 2: Innengehäuse von 3
- 3: Bypasskanal
- 4: Verdichtergehäuse
- 5: Rotorschaufeln
- 6: Statorschaufeln
- 7 (7.1-7.4): Verdichterstufen
- 8: Verdichterkanal, Strömungspfad
- 9: Eintrittsseite v. 8
- 10: Austrittsseite v. 8
- 11: Zapfstelle, Verdichterluftentnahmestelle
- 12: Zapfluftleitung
- 13: Düse
- T1: Eintrittstemperatur der Verdichterluft
- T2: Verdichterlufttemperatur an Zapfstelle
- T4: Verdichterlufttemp. an Austrittsseite
- T5: Bypasslufttemperatur
- Pfeil A: Verdichterluft eintrittsseitig
- Pfeil B: Verdichterluft austrittsseitig
- Pfeil C: heiße Verdichterzapfluft
- Pfeil D: gekühlte Verdichterzapfluft
- Pfeil E: kalte Bypassluft

## Patentansprüche

1. Verfahren zum Betreiben eines Strahltriebwerks mit Verdichterluftzirkulation zur Stabilisierung der Strömungsverhältnisse, bei dem an einer stromab der Eintrittsseite des Verdichters gelegenen Zapfstelle Verdichterzapfluft im Bereich eines nach außen von einem Verdichtergehäuse begrenzten Verdichterkanals entnommen wird und einer stromauf gelegenen Verdichterstufe im Bereich des Verdichterkanals mit gegenüber den in dieser herrschenden Verhältnissen höherem Druck zugeführt wird, wobei die abgezweigte Verdichterzapfluft vor dem Wiedereintritt in den Verdichter gekühlt wird
, **dadurch gekennzeichnet, dass** die Verdichterzapfluft im Wärmeaustausch mit im Bypasskanal des Strahltriebwerks strömender Bypassluft gekühlt wird.

2. Verfahren nach Anspruch 1, **dadurch gekennzeichnet, dass** die dem Verdichter wieder zugeführte Verdichterzapfluft mindestens soweit heruntergekühlt wird, dass die Temperatur der austrittsseitigen Verdichterluft nicht höher als im Normalbetrieb des Verdichters ohne Verdichterluftzirkulation ist.

3. Strahltriebwerk mit Verdichterluftzirkulation zur Durchführung des Verfahrens nach einem der Ansprüche 1 bis 2 bei einem vom Innengehäuse eines Bypasskanals (3) umgebenen Verdichter (1), der eine Zapfstelle (11) zum Absaugen von Verdichterzapfluft an einer stromab gelegenen Position des Strömungspfads und mindestens eine von dieser ausgehende Zapfluftleitung (12), die an einer stromauf gelegenen Verdichterstufe (7) in den Verdichter (1) mündet, umfasst, **dadurch gekennzeichnet, dass** die Zapfluftleitung (12) teilweise durch den von kühlerer Bypassluft als die Verdichterzapfluft durchströmten Bypasskanal (3) geführt ist.

4. Strahltriebwerk nach Anspruch 3, **dadurch gekennzeichnet, dass** in den im Bypasskanal (3) verlaufenden Teil der mindestens einen Zapfluftleitung zur Verbesserung des Wärmeaustauschs ein Wärmeübertrager eingebunden ist.

## Claims

1. Method for operating a jet engine with compressor air circulation for stabilizing the flow conditions, with compressor bleed air being tapped at a bleed point downstream of the compressor inlet side in the region of a compressor duct outwardly confined by a compressor casing and fed to an upstream compressor stage in the region of the compressor duct with higher pressure in comparison with the conditions prevailing in this stage, with the tapped compressor bleed air being cooled down prior to reentering the compressor, **characterized in that** the compressor bleed air is cooled by heat exchange with bypass air flowing in the bypass duct of the jet engine.

2. Method in accordance with Claim 1, **characterized in that** the compressor bleed air which is resupplied to the compressor is cooled down to at least such an extent, that the temperature of the outlet-side compressor air is not higher than in normal compressor operation without compressor air circulation.

3. Jet engine with compressor air circulation for the performance of said method in accordance with one of the Claims 1 or 2, featuring a compressor (1) enclosed by the inner casing of a bypass duct (3), said compressor (1) including a bleed point (11) for drawing off compressor bleed air at a downstream position of the flow path and at least one bleed air line (12) originating at this bleed point (11) and issuing into the compressor (1) at an upstream compressor stage (7), **characterized in that** the bleed air line (12) is partly routed through the bypass duct (3) which is flowed by bypass air cooler than the compressor bleed air.

4. Jet engine in accordance with Claim 3, **characterized in that** a heat transferring element for improving heat exchange is incorporated into that part of the at least one bleed air line which is routed in the bypass duct (3).

## Revendications

1. Procédé destiné à faire fonctionner un moteur à réaction avec une circulation d'air de compresseur afin de stabiliser les conditions d'écoulement, dans lequel de l'air de purge de compresseur est prélevé à un point de prélèvement situé en aval du côté admission du compresseur dans la zone d'un canal de compresseur limité vers l'extérieur par un carter de compresseur, et est amené à un étage de compresseur situé en amont dans la zone du canal de compresseur avec une pression supérieure aux conditions régnant dans ledit étage, sachant que l'air de purge de compresseur dérivé est refroidi avant la réintroduction dans le compresseur, **caractérisé en ce que** l'air de purge de compresseur est refroidi par échange thermique avec l'air de dérivation s'écoulant dans le canal de dérivation du moteur à réaction.

2. Procédé selon la revendication n° 1, **caractérisé en ce que** l'air de purge de compresseur réintroduit dans le compresseur est au moins refroidi à un tel point que la température de l'air de compresseur côté refoulement n'est pas plus élevée que lors du fonctionnement normal du compresseur sans circulation d'air de compresseur.

3. Moteur à réaction avec circulation d'air de compresseur pour réaliser le procédé selon une des revendications n° 1 ou n° 2 en présence d'un compresseur (1) entouré par le carter intérieur d'un canal de dérivation (3) et comprenant un point de prélèvement (11) pour aspirer de l'air de purge de compresseur à une position de la voie d'écoulement située en aval, et au moins une conduite d'air de purge (12) qui part dudit point de prélèvement (11) et aboutit dans le compresseur (1) sur un étage de compresseur (7) situé en amont, **caractérisé en ce que** la conduite d'air de purge (12) s'étend partiellement dans le canal de dérivation (3) traversé par l'air de dérivation plus frais que l'air de purge de compresseur.

4. Moteur à réaction selon la revendication n° 3, **caractérisé en ce que** dans la partie de l'au moins une conduite d'air de purge s'étendant dans le canal de dérivation (3) est intégré un caloporteur afin d'améliorer l'échange thermique.
